# EUROPÄISCHE PATENTSCHRIFT

(11) **EP 0 594 115 B1**
(45) Veröffentlichungstag und Bekanntmachung des Hinweises auf die Patenterteilung: **20.11.1996**
(21) Anmeldenummer: 93116823.1
(22) Anmeldetag: 19.10.1993
(51) Int. Cl.: H02P 3/06

(54) **Verfahren für den Betrieb eines elektrisch bremsbaren Elektromotors und zugehörige Bremsschaltung**
Method of operation for an electically braked electic motor and corresponding braking circuit
Méthode pour fonctionnement d'un moteur électrique freiné électriquement et circuit de freinage associé

(30) Priorität: 23.10.1992 DE 4235774
(43) Veröffentlichungstag der Anmeldung: 27.04.1994
(73) Patentinhaber: Marquardt GmbH, 78604 Rietheim-Weilheim (DE)
(72) Erfinder: Bufe, Michael, D-78604 Rietheim-Weilheim (DE); Kühnemundt, Gerhard, D-78576 Emmingen-Liptingen (DE); Knappe, Alexander, D-78604 Rietheim-Weilheim (DE)
(74) Vertreter: Patentanwälte Eisele, Otten & Roth

(56) Entgegenhaltungen:
- DE-A- 2 002 768
- DE-A- 3 539 841
- DE-A- 3 636 555
- DE-A- 4 022 637
- DE-C- 3 546 719

## Beschreibung

Die Erfindung betrifft ein Verfahren für den Betrieb eines elektrisch bremsbaren Elektromotors nach dem Oberbegriff des Patentanspruchs 1 und eine zur Durchführung des Verfahrens geeignete Bremsschaltung nach dem Oberbegriff des Patentanspruchs 7.

Elektromotoren besitzen aufgrund ihrer kinetischen Energie nach dem Abschalten der Netzspannung eine längere Auslaufzeit. Insbesondere beim Einsatz in Elektrohandwerkzeugen, wie Winkelschleifer, Kettensägen, Elektrohobel, u. dgl. ist es wegen der möglichen Verletzungsgefahr für den Bediener erwünscht, beim Abschalten des Elektromotors für ein schnelles Abbremsen desselben und damit des Elektrohandwerkzeugs zu sorgen. Üblicherweise erfolgt das Abbremsen des Elektromotors mittels einer Bremsschaltung, in der beim Abschalten, d.h. beim Umschalten vom Motor- in den Bremsbetrieb, der Anker und die Feldwicklung sowie gegebenenfalls ein weiterer Ohm'scher Bremswiderstand in einen Bremsstromkreis geschaltet werden. In der Bremsschaltung wird dann die kinetische Energie in Wärme umgewandelt und an die Umgebungsluft abgegeben.

Aus DE-PS 35 46 719 ist eine derartige Bremsschaltung für einen elektrischen Universalmotor bekannt, bei der ein Bremsstromkreis gebildet wird, indem der Anker des Elektromotors im ausgeschalteten Zustand über das Feld kurzgeschlossen ist. Dazu ist ein aus zwei Umschaltern S1, S2 bestehender Bremsschalter vorgesehen, deren Anschlüsse für die Schaltkontakte mit den beiden Anschlüssen der Feldwicklung verbunden sind. Die Anschlüsse für die Ruhekontakte der beiden Umschalter S1, S2 sind so mit einem Netzpol und den beiden Seiten der Ankerwicklung verschaltet, daß in ausgeschaltetem Zustand des Elektromotors die Polarität der Ankerwicklung in Bezug auf die Feldwicklung entgegengesetzt zu derjenigen im eingeschalteten Zustand des Elektromotors ist.

Zur Vermeidung einer Zerstörung der Kontakte des Bremsschalters aufgrund von hohen Strömen im Bremsstromkreis beim Abschalten des Elektromotors oder aufgrund von Netzkurzschlüssen wird vorgeschlagen, daß die Schaltvorgänge im Bremsschalter zeitversetzt stattfinden. Beim Umschalten vom Motor- in den Bremsbetrieb wird zunächst der netznahe Umschalter S1 und dann der netzferne Umschalter S2 betätigt. Beim Umschalten vom Brems- in den Motorbetrieb wird zuerst der netzferne Umschalter S2 und dann der netznahe Umschalter S1 betätigt. Über die Schaltreihenfolge am Umschalter S1, S2 hinausgehende Angaben für den Betrieb des elektrisch bremsbaren Elektromotors lassen sich aus dieser Patentschrift nicht entnehmen.

Weiter sind elektronische Schaltungen bekannt, die im Bremsstromkreis der Bremsschaltung angeordnet sind und die der Steuerung oder Regelung der Bremsung des Elektromotors dienen. Solche Bremselektroniken werden beispielsweise in der DE-OS 35 39 841, DE-OS 36 36 555 und der DE-OS 40 22 637 beschrieben. Nähere Angaben zum Umschaltvorgang an sich vom Motor- in den Bremsbetrieb und umgekehrt sind diesen Offenlegungsschriften nicht zu entnehmen.

Es hat sich gezeigt, daß bei einer Bremsschaltung der angegebenen Art, insbesondere bei der Verwendung einer Bremselektronik, Kurzschlüsse mit dem die Versorgungsspannung des Elektromotors liefernden Netz am Umschalter S1, S2 auftreten können, die zum Verschweissen der Kontakte und damit zu einer unmittelbaren Zerstörung des Schalters führen. Dabei besteht zudem die Gefahr, daß die Bremselektronik sowie der Elektromotor selbst ebenfalls in Mitleidenschaft gezogen werden. Besonders häufig tritt dieses Problem an Elektromotoren mit höherer Leistung, beispielsweise über 1400 W, auf. Weiter wurde festgestellt, daß die Kurzschlüsse vermehrt dann vorkommen, wenn vom Bremsbetrieb unmittelbar in den Motorbetrieb zurückgeschaltet wird, ohne daß ein Stillstand des Motors abgewartet wird.

Ausgehend von diesem Stand der Technik liegt der Erfindung die Aufgabe zugrunde, ein Verfahren zum Betrieb eines elektrisch bremsbaren Elektromotors, insbesondere eines Elektromotors mit höherer Leistung anzugeben, bei dem Kurzschlüsse mit dem Netz auch beim Zurückschalten in den Motorbetrieb unmittelbar nach Umschalten vom Motor- in den Bremsbetrieb mit Sicherheit vermieden werden. Weiter soll eine zur Durchführung dieses Verfahrens geeignete Bremsschaltung angegeben werden, die insbesondere auch zur Verwendung mit einer Bremselektronik geeignet ist.

Diese Aufgabe wird bei einem gattungsgemäßen Verfahren zum Betrieb des elektrisch bremsbaren Elektromotors durch die kennzeichnenden Merkmale des Anspruchs 1 sowie bei einer zur Durchführung dieses Verfahrens bestimmten Bremsschaltung durch die kennzeichnenden Merkmale des Anspruchs 7 gelöst.

Weitere vorteilhafte Ausgestaltungen der Erfindung sind Gegenstand der Unteransprüche.

Die mit der Erfindung erzielten Vorteile bestehen insbesondere darin, daß die Gefahr von Kurzschlüssen mit dem Netz wirksam gebannt ist. Eine Gefährdung des Benutzers, die ansonsten bei derartigen Kurzschlüssen auftritt, kann ausgeschlossen werden. Durch Kurzschlüsse bedingte vorzeitige Ausfälle des Umschalters, des Elektromotors sowie der Bremselektronik treten nicht auf. Zusätzlich wird eine Überbelastung des Elektromotors im Bremsbetrieb vermieden und eine weitgehende Schonung desselben erreicht, was letztendlich zur Erhöhung der Lebensdauer des Elektromotors führt. Das erfindungsgemäße Verfahren sowie die zugehörige Bremsschaltung sind universell verwendbar und lassen sich auch bei Elektromotoren höherer Leistung einsetzen.

Ein Ausführungsbeispiel der Erfindung ist in den Zeichnungen dargestellt und wird im folgenden näher beschrieben. Es zeigen
- Fig. 1: das Prinzipschaltbild einer Bremsschaltung mit Bremselektronik für einen Elektromotor mit Schalterstellung für den Motorbetrieb,
- Fig. 2: das Schaltbild einer Bremsschaltung gemäß Fig. 1 mit Schalterstellung für den Bremsbetrieb,
- Fig. 3: den Stromfluß im Bremsstromkreis während des Bremsbetriebs bei gesperrter Bremselektronik,
- Fig. 4: den Stromfluß im Bremsstromkreis während des Bremsbetriebs bei leitender Bremselektronik,
- Fig. 5: das Schaltbild einer Bremsschaltung gemäß Fig. 1 mit einer Einrichtung zur Erzeugung eines elektrischen Signals für die Bremselektronik beim Umschalten vom Brems- in den Motorbetrieb,
- Fig. 6: das Schaltbild einer Bremsschaltung gemäß Fig. 1 mit einer Einrichtung zur Erzeugung eines elektrischen Signals in einer weiteren Ausführungsform,
- Fig. 7: das Schaltbild einer Bremsschaltung in einer zur Fig. 1 äquivalenten Darstellung mit einer Einrichtung zur Erzeugung eines elektrischen Signals in nochmals einer anderen Ausführungsform und
- Fig. 8: ein Prinzipschaltbild zur Funktionsweise der Bremselektronik.

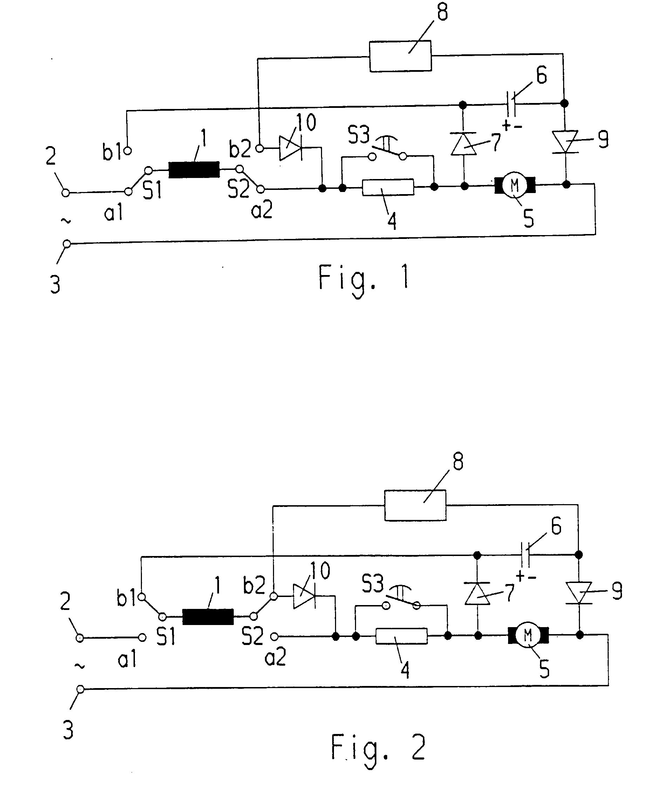

In Fig. 1 ist die Schaltung eines elektrischen Universalmotors, wie er für Elektrohandwerkzeuge, beispielsweise Bohrmaschinen, Winkelschleifer, Elektrohobel, elektrische Heckenscheren, u. dgl. eingesetzt wird, in der Stellung des Motorbetriebs gezeigt.

Der Elektromotor besitzt eine Feldwicklung 1, an deren Anschlüsse zwei Umschalter S1 und S2 angeschaltet sind. Der Umschalter S1 schaltet zwischen zwei Kontakten al, bl um, wobei der Kontakt al die erste Verbindung zum Motorkreis darstellt. Bei dieser Verbindung handelt es sich um den einen Anschluß 2 der Versorgungsspannung, die von der Wechselspannung des Netzes gebildet wird. Der andere Kontakt bl stellt den ersten Anschluß des Bremsstromkreises dar. Der Umschalter S2 schaltet zwischen zwei Kontakten a2, b2 um, wobei a2 wiederum die zweite Verbindung zum Motorkreis und b2 den zweiten Anschluß des Bremsstromkreises darstellt. In vorliegendem Ausführungsbeispiel handelt es sich somit beim Umschalter S1 um den netznahen Umschalter und beim Umschalter S2 um den netzfernen Umschalter. In Verbindung mit dem Kontakt a2 steht im Motorkreis der Widerstand 4, der mittels eines weiteren Schalters S3 überbrückt werden kann. In Reihe ist dann weiter die Ankerwicklung 5 und an dieser der andere Anschluß 3 der Versorgungsspannung geschaltet. Selbstverständlich ist es auch möglich eine weitere Feldwicklung zwischen Ankerwicklung 5 und Anschluß 3 oder zwischen der ersten Feldwicklung 1 und dem Umschalter S2 zu schalten.

Bei der folgenden Beschreibung der Funktion der Schaltung im Motorbetrieb wird die vom Anschluß 2 ausgehende positive Halbwelle der Versorgungsspannung betrachtet. Für die negative Halbwelle verläuft die Stromrichtung entgegengesetzt, so daß sich nähere Ausführungen dazu erübrigen.

In der Anlaufphase des Motorbetriebs fließt der Strom vom Anschluß 2 über den Kontakt a1 des Umschalters S1, die Feldwicklung 1 und den Kontakt a2 des Umschalters S2 zum Widerstand 4, da der Schalter S3 noch geöffnet ist. Von dort fließt der Strom weiter zur Ankerwicklung 5 und dann schließlich zum Anschluß 3 der Versorgungsspannung. Der Widerstand 4 dient damit in der Anlaufphase als Vorwiderstand zur Begrenzung des Anlaufstroms. Nach Beendigung der Anlaufphase wird der Schalter S3 geschlossen und der Widerstand 4 somit überbrückt, so daß der Strom vom Umschalter S2 und dem Kontakt a2 direkt in die Ankerwicklung 5 ohne Begrenzung durch den Widerstand 4 fließt.

Parallel zur Ankerwicklung 5 ist ein Kondensator 6 über eine Diode 7 angeschaltet. Dieser Kondensator 6 dient in bekannter Weise (vgl. DE-A-2002768) als Startkondensator zur Einleitung des Bremsbetriebes, wie nachfolgend noch näher erläutert wird. Die Diode 7 ist mit ihrer Kathode an den Kondensator 6 angeschaltet, so daß dieser sich mit der in der Fig. 1 eingezeichneten Polarität im Motorbetrieb auflädt. Eine Entladung des Kondensators 6 während der negativen Halbwelle der Versorgungsspannung wird wiederum durch die Diode 7 verhindert.

Werden die beiden Umschalter S1 und S2 an ihre Kontakte b1 und b2 geschaltet, wie in Fig. 2 gezeigt ist, so befinden sich die Feldwicklung 1 und die Ankerwicklung 5 im Bremsstromkreis. In dieser Stellung des Bremsbetriebes der Umschalter S1 und S2 wirkt der Elektromotor als Generator. Dabei durchfließt der Strom im Bremsbetrieb die Feldwicklung 1 und die Ankerwicklung 5 in entgegengesetzter Richtung, während im Motorbetrieb die Feldwicklung 1 und die Ankerwicklung 5 in gleichsinniger Richtung durchflossen werden. Der Bremsstromkreis teilt sich im Bremsbetrieb weiter in zwei Zweige für den Bremsstrom auf. In einem ersten Zweig befindet sich ein aus einer Bremselektronik 8 zur Steuerung oder Regelung des Bremsstromes bestehendes elektrisches Steuerbauteil, das mindestens zwei elektrische Zustände besitzt, nämlich einen ersten Zustand mit einem hohen Ohm'schen Widerstand, vorzugsweise einen nichtleitenden Zustand und einen zweiten Zustand mit einem niedrigen Ohm'schen Widerstand für den Bremsstrom. Im Bremsbetrieb ist auch der Schalter S3 geöffnet, so daß sich der Widerstand 4 im anderen zweiten Zweig des Bremsstromkreises befindet.

Unmittelbar nach Umschalten in den Bremsbetrieb entlädt sich der Kondensator 6, wobei ein Strom über die Verbindung am Kontakt b1 des Umschalters S1 durch die Feldwicklung 1, den Umschalter S2 zum Kontakt b2 fließt. Von dort fließt der Strom über die Bremselektronik 8 zurück zum Kondensator. Dadurch wird erreicht, daß die Feldwicklung 1 unabhängig von der jeweiligen Phase der Versorgungsspannung zu Beginn der Bremsung mit einer bestimmten Polarität erregt wird und zwar auch dann, wenn der Restmagnetismus in der Feldwicklung 1 für eine Erregung nicht mehr ausreicht oder eine falsche Polarität aufweist. Der aufgrund der Generatorwirkung des Elektromotors erzeugte Bremsgleichstrom weist dann ebenfalls die richtige Polarität auf und führt dann zur weiteren Selbsterregung der Feldwicklung 1 in der besagten Polarität in Bezug auf die Ankerwicklung 5. Eine Entladung des Kondensators 6 vom Kontakt b2 über den Widerstand 4 und der Ankerwicklung 5, was aufgrund der dann falschen Richtung in der Ankerwicklung 5 zu einer Fehlbremsung führen kann, wird durch eine zwischen dem negativen Pol des Kondensators 6 und dem dem Widerstand 4 abgewandten Anschluß der Ankerwicklung 5 geschaltete Diode 9 verhindert. Die Diode 9 ist zu diesem Zweck mit ihrer Anode am Kondensator 6 angeschaltet.

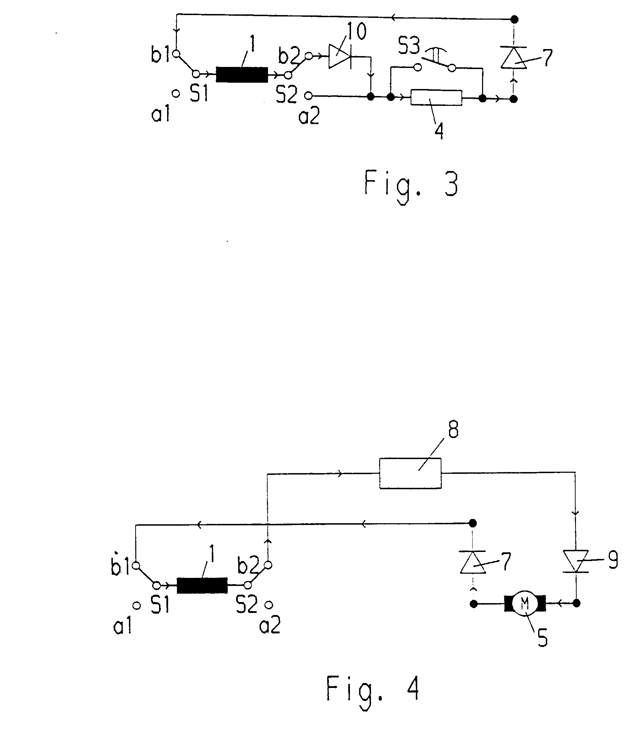

Nach Einsetzen der Selbsterregung fließt aufgrund der in der Ankerwicklung 5 induzierten Spannung des als Generator wirkenden Elektromotors ein Strom von der Ankerwicklung 5 über die Diode 7 zum Kontakt b1 und von dort über den Umschalter S1 in die Feldwicklung 1. Von der Feldwicklung 1 fließt der Strom dann über den Umschalter S2 zum Kontakt b2, von dort durch die leitend geschaltete Bremselektronik 8, was gerade dem zweiten Zustand des elektrischen Steuerbauteils entspricht, und dann zurück zur Ankerwicklung 5. Dieser erste Zweig des Bremsstromkreises im Bremsbetrieb ist mit Stromflußrichtung in Fig. 4 näher gezeigt. Wie man dort sieht, haben die Feldwicklung 1 und die Ankerwicklung 5 die richtige Polarität, d.h. der Strom fließt wie im Generatorbetrieb erforderlich in der Feldwicklung 1 entgegengesetzt zur Ankerwicklung 5.

Aufgrund der Generatorwirkung steigt der Strom in der Feldwicklung 1 immer weiter an. Hat er eine bestimmte obere Grenze erreicht, so wird die Bremselektronik 8 in einen hochohmigen Zustand, so daß allenfalls ein geringer Strom durch die Bremselektronik 8 fließen kann oder vorzugsweise in den nichtleitenden Zustand versetzt, was folglich dem ersten Zustand des elektrischen Steuerbauteils entspricht, und somit gesperrt. Damit muß der Strom am Kontakt b2 in den anderen zweiten Zweig des Bremsstromkreises fließen, der in Fig. 3 näher dargestellt ist, so daß mit Hilfe der Bremselektronik 8 der zweite Zweig des Bremsstromkreises separat vom ersten Zweig für den Bremsstrom zu- oder abgeschaltet werden kann. Wie in Fig. 3 zu sehen ist, fließt der Strom dann über die Diode 10 durch den Widerstand 4. Von dort fließt er über die Diode 7 weiter zum Kontakt b1 und über den Umschalter S1 zurück in die Feldwicklung 1.

Die Dioden 7, 9 und 10 sorgen somit auch dafür, daß der Strom im jeweiligen Zweig des Bremsstromkreises die für den Generatorbetrieb notwendige Polarität besitzt. Der zweite Zweig des Bremsstromkreises, den der Strom bei gesperrter Bremselektronik 8 durchläuft, wird auch Freilaufzweig genannt. Bei den Dioden 7 und 10, die im Freilaufzweig angeordnet sind, handelt es sich somit um sogenannte Freilaufdioden. Die Bezeichnung Freilaufzweig leitet sich von der Gegebenheit ab, daß im zweiten Zweig des Bremsstromkreises, die Ankerwicklung 5 überbrückt ist, so daß der Bremsstrom in diesem Zweig nicht durch die Ankerwicklung 5 fließt.

Da der Strom im Freilaufzweig über den Widerstand 4 fließt, wird dort Leistung in Wärme umgesetzt und der Strom nimmt ab. Der Widerstand 4 wirkt damit im Bremsbetrieb bei gesperrter Bremselektronik 8 als Ohm'scher Bremswiderstand. Unterschreitet der Strom eine gewisse Grenze oder ist alternativ ein festgelegtes Zeitfenster abgelaufen, so wird die Bremselektronik 8 erneut in den niederohmigen leitenden Zustand versetzt, so daß der Strom wiederum in den ersten Zweig des Bremsstromkreises fließt. Aufgrund der Selbsterregung steigt dann der Strom im Bremsstromkreis wieder solange an, bis die Bremselektronik 8 erneut sperrt.

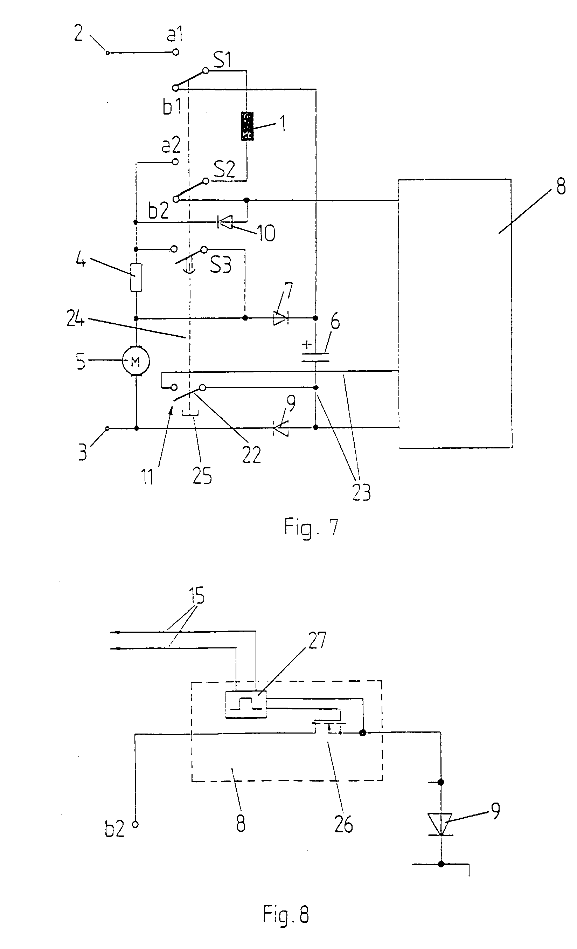

Die Bremselektronik 8 wird somit zwischen dem leitenden und dem hochohmigen, vorzugsweise nichtleitenden Zustand geschaltet, d.h. sie arbeitet getaktet. Wie in Fig. 8 in einem Prinzip-Schaltbild näher zu sehen ist, besitzt die Bremselektronik einen Leistungstransistor und zwar einen Power-MOSFET 26, dessen Gate von einem Taktgeber 27 angesteuert wird, so daß der Power-MOSFET 26 zwischen seinem leitenden und nichtleitendem Zustand entsprechend der beschriebenen Taktung angesteuert wird. Diese Ansteuerung des Power-MOSFET 26 erfolgt solange bis die kinetische Energie des Elektromotors aufgrund der Ohm'schen Verluste im Bremsstromkreis aufgebraucht ist. Dadurch wird einerseits ein sehr schnelles Abbremsen des Elektromotors erreicht, andererseits ein zu abruptes Abbremsen des Elektromotors, wie es ohne Bremselektronik auftreten würde, jedoch vermieden.

Einzelheiten der Schaltungsanordnungen für solche getakteten Bremselektroniken sind bekannt, beispielsweise aus der DE-OS 36 36 555 oder der DE-OS 40 22 637 und brauchen an dieser Stelle daher nicht näher erläutert zu werden. Anstelle einer getaktet arbeitenden Bremselektronik kann auch eine kontinuierlich arbeitende Bremselektronik eingesetzt werden, die dafür sorgt, daß der im Bremsstromkreis fließende Strom nahezu konstant gehalten wird. Auch eine solche Bremselektronik ist beispielsweise aus der DE-OS 35 39 841 bekannt.

Im Motorbetrieb fließen im Motorkreis hohe Ströme, insbesondere wenn Elektromotoren höherer Leistung, beispielsweise ab 1200 W, verwendet werden, so daß beim Umschalten vom Motor- in den Bremsbetrieb an den Schaltkontakten der beiden Umschalter S1, S2 Lichtbögen auftreten können (man vergleiche dazu auch Fig. 1 oder 2). Diese Lichtbögen können einen Kurzschluß zum Netz und daraus resultierend eine Zerstörung des Schalters sowie Fehlbremsungen, bei denen der Elektromotor ungebremst ausläuft, bewirken.

Zur Vermeidung von solchermaßen schädlichen Auswirkungen schlägt die nicht vorveröffentlichte deutsche Patentanmeldung P 42 32 402.5 (& EP-A-0590377, veröffentlicht am 06.04.94) vor, daß die Schaltkontakte der beiden Umschalter S1, S2 in einer bestimmten Weise geschaltet werden. Zunächst öffnen beim Umschalten vom Motor- in den Bremsbetrieb die beiden Umschalter S1, S2 den Motorkreis im wesentlichen synchron, indem deren Schaltkontakte im wesentlichen gleichzeitig von ihren Kontakten a1, a2 wegbewegt werden. Anschließend bewegt sich der Schaltkontakt des netznahen Umschalters S1 gegenüber dem Schaltkontakt des netzfernen Umschalters S2 verzögert, d.h. die beiden Umschalter S1, S2 werden mit einem Zeitversatz geschaltet. Dadurch wird der Bremsstromkreis am netznahen Umschalter S1 später eingeschaltet. Beim Umschalten vom Brems- in den Motorbetrieb öffnen die Schaltkontakte beider Umschalter S1, S2 im wesentlichen synchron, so daß sie im wesentlichen gleichzeitig von den Kontakten b1, b2 wegbewegt werden. Die beiden Schaltkontakte bewegen sich anschließend unverzögert und schalten danach im wesentlichen gleichzeitig den Motorkreis ein, d.h. sie kommen im wesentlichen gleichzeitig zur Anlage an die Kontakte a1 und a2.

Der während des Bremsbetriebes im Bremsstromkreis auftretende Bremsstrom kann ebenfalls sehr hoch werden. Je nach Motorleistung können dabei Gleichströme von beispielsweise 30 A und mehr auftreten, die erst im Verlaufe des Bremsbetriebes bis auf Null reduziert werden. Schaltet der Benutzer vom Motor- in den Bremsbetrieb und dann wieder in den Motorbetrieb zurück, so ist der hohe Bremsstrom in der Regel noch nicht gedämpft und es entsteht jeweils ein Lichtbogen zwischen den Kontakten a1, b1 oder a2, b2 an den Umschaltern S1 oder S2 aufgrund dieses hohen Gleichstromes. Es hat sich nun gezeigt, daß besonders bei Elektromotoren mit hoher Leistung, insbesondere größer ca. 1400 W, Konstellationen vorkommen können, bei denen die zwischen den Schaltkontakten und den Kontakten b1, b2 auftretenden Lichtbögen trotz der oben genannten Maßnahmen nicht gelöscht sind bis die Schaltkontakte an den Kontakten a1, a2 anlegen. Wie anhand der Fig. 1 zu sehen ist, besitzt der Bremsstromkreis in diesem Fall einen Netzkurzschluß. Besitzt die Netzspannung dann noch eine derartige Phase, daß ein Motorstrom in dieselbe Richtung wie der Bremsstrom fließt, so können dann in einem solchen Falle des Kurzschlußes Ströme von 100 bis 200 A fließen, was zu einer sofortigen Zerstörung der Umschalter S1, S2 führt.

Es wurde nun herausgefunden, daß der kritische, den Netzkurzschluß begünstigende Teil bei derartigen Konstellationen der hohe Bremsstrom ist, der für eine Aufrechterhaltung der Lichtbögen während der Bewegung der Schaltkontakte von den Kontakten b1, b2 zu den Kontakten al, a2 sorgt. Um die genannten schädlichen Auswirkungen zu vermeiden, wird erfindungsgemäß vorgeschlagen, daß beim Umschalten vom Brems- in den Motorbetrieb der die Ankerwicklung 5 enthaltende erste Zweig des Bremsstromkreises für den Bremsstrom gesperrt wird. Dadurch erfolgt ein Umleiten des im ersten Zweig fließenden Bremsstromes auf den zweiten Zweig. Da sich die Ankerwicklung 5 im ersten Zweig des Bremsstromkreises befindet, ist im zweiten Zweig kein Generator wirksam, so daß die Selbsterregung in der Feldwicklung 1 zusammenbricht. Gleichzeitig wird der noch vorhandene Bremsstrom aufgrund des im zweiten Zweig enthaltenen Widerstandes 4 stark gedämpft, so daß letztendlich der die Lichtbögen zwischen den Schaltkontakten an den Umschaltern S1, S2 und den Kontakten b1, b2 aufrechterhaltende Bremsstrom zusammenbricht. Dadurch erlöschen diese Lichtbögen innerhalb der Zeit bis die Schaltkontakte sich an die Kontakt a1, a2 anlegen. Folglich ist dadurch ein Netzkurzschluß sowie eine damit einhergehende Gefahr der Zerstörung der Umschalter S1, S2 wirksam verhindert und der Motorbetrieb des Elektromotors wird gestartet.

Für geringere Anforderungen kann es genügen, wenn der Bremsstromkreis lediglich einen Zweig mit der Ankerwicklung 5 enthält, in dem sich gleichzeitig das elektrische Steuerbauteil befindet. Dies kann insbesondere dann der Fall sein, wenn das elektrische Steuerbauteil mehr als zwei Zustände einnehmen kann, beispielsweise wenn eine kontinuierlich arbeitende Bremselektronik als elektrisches Steuerbauteil Verwendung findet. Dann reicht es auch aus, beim Umschalten vom Brems- in den Motorbetrieb lediglich diesen einen Zweig des Bremsstromkreises zu sperren ohne daß eine Umleitung des Bremsstromes in einen anderen Zweig erfolgen müßte.

In einer Weiterbildung der Erfindung wird berücksichtigt, daß nicht immer beim Umschalten vom Brems- in den Motorbetrieb ein Sperren des ersten Zweiges des Bremsstromkreises notwendig ist. Ist beispielsweise nach dem erfolgten Umschalten vom Motor- in den Bremsbetrieb die Bremsung schon weitgehend abgeschlossen, so ist der Bremsstrom in der Regel auf einen minimalen Betrag abgefallen, so daß dieser zur Erzeugung eines Lichtbogens nicht mehr ausreicht. Dies ist erst recht der Fall, wenn der Elektromotor bereits den Stillstand erreicht hat, da dann überhaupt kein Bremsstrom mehr vorhanden ist. Zur Berücksichtigung solcher Situationen kann bei dem Verfahren zum Betrieb des Elektromotors beim Umschalten vom Brems- in den Motorbetrieb festgestellt werden, ob überhaupt ein Lichtbogen erzeugt wurde und nur falls dies der Fall ist, der erste Zweig des Bremsstromkreises gesperrt werden. Als Kriterium für die Erzeugung eines Lichtbogens kann die Größe des im Bremsstromkreis fließenden Bremsstromes ermittelt werden. Überschreitet die Größe des Bremsstromes einen bestimmten Betrag, der für das Auftreten von Lichtbögen an den Schaltkontakten der Umschalter S1, S2 kritisch ist, so wird der erste Zweig des Bremsstromkreises gesperrt. Andernfalls wird keine Änderung am Zustand der Bremselektronik 8 vorgenommen.

Unter Umständen kann eine Messung des im Bremsstromkreis fließenden Bremsstromes schwierig sein. Es genügt jedoch auch, eine zum Bremsstrom in funktionellem Zusammenhang stehende Größe zu ermitteln. Die Sperrung des ersten Zweiges erfolgt dann wiederum in Abhängigkeit von deren Betrag. Eine solche mit dem Bremsstrom in funktionellem Zusammenhang stehende Größe ist beispielsweise der Spannungsabfall zwischen dem Schaltkontakt am Umschalter S1 bzw. S2 und dem Kontakt b1 bzw. b2.

Die Sperrung des ersten Zweiges des Bremsstromkreises ist nur solange notwendig bis die Schaltkontakte der Umschalter S1, S2 an den Kontakten a1, a2 anlegen und der Motorbetrieb wieder eingeschaltet ist. Danach wird der erste Zweig des Bremsstromkreises wieder entsperrt, damit bei Bedarf erneut eine elektrische Bremsung des Elektromotors eingeleitet werden kann. Es kann jedoch auch genügen, die Entsperrung des ersten Zweiges des Bremsstromkreises erst beim Umschalten vom Motor- in den Bremsbetrieb vorzunehmen.

Zur Durchführung des erfindungsgemäßen Verfahrens beim Betrieb eines Elektromotors befindet sich an der anhand der Fig. 1 beschriebenen Bremsschaltung eine Einrichtung 11 zur Erzeugung eines elektrischen Signals, die mit einem der beiden Umschalter S1, S2 in Verbindung steht und dieses Signal beim Umschalten vom Brems- in den Motorbetrieb erzeugt. Dieses Signal wird zu dem Steuerbauteil, das in vorliegendem Fall durch die Bremselektronik 8 dargestellt wird, weitergeleitet und bewirkt ein Schalten des Steuerbauteils in einen hochohmigen, vorzugsweise nichtleitenden ersten Zustand.

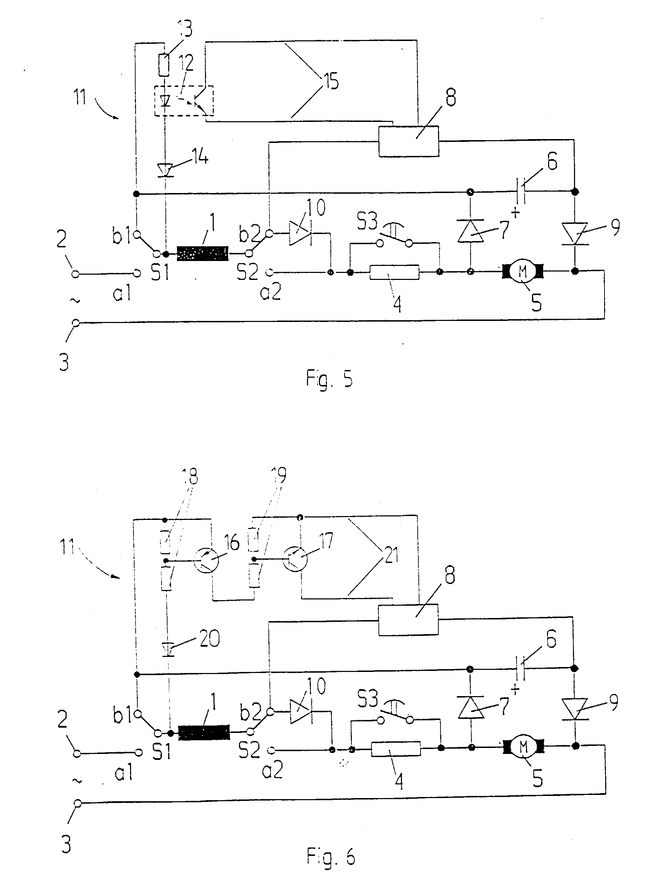

Zwei Ausführungsformen dieser Einrichtung 11 zur Erzeugung eines elektrischen Signals sind näher in den Fig. 5 und 6 zu sehen, wobei bei diesen Einrichtungen 11 nur dann das elektrische Signal erzeugt wird, wenn zwischen dem Schaltkontakt des Umschalters S1 und dem zugehörigen Anschluß b1 des Bremsstromkreises ein Lichtbogen auftritt. Die Einrichtung 11 wirkt für diese Fälle somit als Sensor zur Feststellung, ob ein Lichtbogen auftritt. Im Bremsbetrieb liegen der Schaltkontakt am Umschalter S1 und der Kontakt bl auf gleichem Potential, ein Spannungsabfall tritt folglich zwischen Schaltkontakt und Kontakt b1 nicht auf. Wird der Schaltkontakt geöffnet und entsteht dabei ein Lichtbogen zwischen dem Schaltkontakt und dem Kontakt b1, so entsteht gleichzeitig ein Spannungsabfall zwischen dem Schaltkontakt und dem Kontakt b1, da die Lichtbogenstrecke einen Ohm'schen Widerstand besitzt. Die Einrichtung 11 erzeugt nun das elektrische Signal in Abhängigkeit von diesem Spannungsabfall, der wiederum in direktem funktionellem Zusammenhang zum Bremsstrom steht.

Die Einrichtung 11 gemäß Fig. 5 besteht aus einem Optokoppler 12, dessen Eingänge zwischen dem Schaltkontakt des Umschalters S1 und dem zugehörigen Anschluß b1 des Bremsstromkreises liegen. An dem dem Kontakt b1 zugewandten Eingang des Optokopplers 12 ist ein Vorwiderstand 13 zur Begrenzung des durch den Optokoppler 12 fließenden Stroms angeschaltet. Weiter ist an dem dem Schaltkontakt des Umschalters S1 zugewandten Eingang des Optokopplers 12 eine Diode 14 angeschaltet, wobei die Anode der Diode 14 dem Kontakt b1 zugewandt ist. Mit der Diode 14 wird sichergestellt, daß der Eingang des Optokopplers 12 eine ausreichende Sperrfähigkeit besitzt und nur im Falle des Umschaltens vom Brems- in den Motorbetrieb ansprechen kann. Die Ausgänge des Optokopplers 12 stehen wiederum über Zuleitungen 15 mit der Bremselektronik 8 in Verbindung.

Tritt beim Umschalten vom Brems- in den Motorbetrieb ein Lichtbogen zwischen dem Schaltkontakt am Umschalter S1 und dem Kontakt b1 auf, weil der Bremsstrom noch nicht genügend im Bremsstromkreis gedämpft ist, so entsteht ein Spannungsabfall über diese Lichtbogenstrecke. Dieser Spannungsabfall verursacht nun einen Strom vom Kontakt b1 über den Vorwiderstand 13, den Eingängen des Optokopplers 12 und der Diode 14 zum Schaltkontakt am Umschalter S1. Das hierdurch bewirkte Durchschalten der Ausgänge des Optokopplers 12 wird als elektrischen Signal über die Zuleitungen 15 der Bremselektronik 8 zugeführt, wodurch die Bremselektronik 8 in den hochohmigen oder nichtleitenden ersten Zustand schaltet, so daß der erste Zweig des Bremsstromkreises gesperrt wird.

Wie man anhand der Fig. 8 sieht, wird das vom Optokoppler 12 an dessen Ausgängen anliegende elektrische Signal über die Zuleitungen 15 dem Taktgeber 27 zugeführt, der dann abschaltet. Aufgrund des Abschaltens des Taktgebers 27, der mit dem Gate des Power-MOSFET 26 verbunden ist, wird der Power-MOSFET in den nichtleitenden Zustand versetzt, womit die Bremselektronik 8 den ersten Zweig des Bremsstromkreises sperrt.

Ein Vorteil der in Fig. 5 gezeigten Einrichtung 11 zur Erzeugung eines elektrischen Signals, die mittels eines Optokopplers 12 realisiert ist, ist die galvanische Trennung zwischen den Ein- und Ausgängen. Dadurch können Probleme mit unterschiedlichen Bezugspotentialen vermieden werden. Eine Potentialanpassung kann weiter mit der in Fig. 6 gezeigten Variante erzielt werden.

Dort besteht die Einrichtung 11 zur Erzeugung eines elektrischen Signals aus einer wenigstens einen, vorzugsweise zwei Transistoren 16, 17 besitzenden Schaltung zur Potentialanpassung, deren Eingang zwischen dem Schaltkontakt des Umschalters S1 und dem zugehörigen Anschluß b1 des Bremsstromkreises liegt. Der bei Auftreten eines Lichtbogens zwischen dem Schaltkontakt am Umschalter S1 und dem Kontakt b1 entstehende Spannungsabfall wird über Widerstände 18 und eine Diode 20 der Basis des ersten Transistors 16 zugeführt. Das Ausgangssignal des ersten Transistors 16 wird über weitere Widerstände 19 der Basis des zweiten Transistors 17 zugeführt und das derart gewonnene Signal vom Ausgang des zweiten Transistors 17 über Zuleitungen 21 schließlich wiederum der Bremselektronik 8 zugeführt, wo wie in Zusammenhang mit Fig. 8 bereits beschrieben, die Bremselektronik 8 in den nichtleitenden Zustand geschaltet wird.

Bei den in Fig. 5 und 6 gezeigten Ausführungsbeispielen für die Einrichtung 11 wird dann ein Signal erzeugt, wenn ein Spannungsabfall aufgrund eines Lichtbogens auftritt. Entsteht beim Öffnen des Schaltkontaktes am Umschalter S1 zwischen dem Schaltkontakt und dem Kontakt b1 kein Lichtbogen, so ist die Eingangsstrecke für die Einrichtung 11 unterbrochen und es wird am Ausgang der Einrichtung 11 im allgemeinen auch kein Signal erzeugt. Durch geeignete Wahl des Optokopplers 12 oder der Transistoren 16, 17 in der Schaltung zur Potentialanpassung kann die gewünschte Empfindlichkeit der Einrichtung 11 eingestellt werden.

Selbstverständlich kann die Einrichtung 11 genausogut zwischen dem Schaltkontakt des Umschalters S2 und dem zugehörigen Anschluß b2 des Bremsstromkreises angeordnet sein. Es kann auch vorteilhaft sein jeweils eine derartige Einrichtung 11 an beiden Umschaltern S1, S2 anzuordnen, da dann in dem Fall, daß ein Lichtbogen nur an einem Umschalter S1 oder S2 entsteht, eine Zerstörung des Umschalters S1, S2 ebenfalls mit Sicherheit verhindert wird.

Bei den in Fig. 5 und 6 gezeigten Ausführungsformen für die Einrichtung 11 wird der erste Zweig des Bremsstromkreises nur dann gesperrt, wenn ein bestimmter Spannungsabfall am Umschalter S1, S2 auftritt, der wiederum charakteristisch für die Größe des Bremsstromes und das Entstehen eines relevanten Lichtbogens ist. Selbstverständlich kann der erste Zweig des Bremsstromkreises auch immer gesperrt werden, sobald vom Brems- in den Motorbetrieb umgeschaltet wird.

Eine derartige Ausführungsform ist näher in Fig. 7 zu sehen, bei der aus darstellerischen Gründen die Bremsschaltung in einer zur Fig. 1 äquivalenten Form gezeigt ist. Dort besteht die Einrichtung 11 zur Erzeugung eines elektrischen Signals aus einem Hilfskontakt 22, der beim Umschalten vom Brems- in den Motorbetrieb gleichzeitig mit Öffnung der Schaltkontakte der Umschalter S1, S2 an den Kontakten b1, b2 des Bremsstromkreises schaltet. Der Hilfskontakt 22 ist vorliegend als Schließer ausgebildet, so daß dann ein elektrisches Signal über die Zuleitungen 23 der Bremselektronik 8 zugeführt wird und dort eine Sperrung des ersten Zweiges des Bremsstromkreises auslöst.

Die einzelnen Schaltkontakte der Umschalter S1 und S2 können, wie in der Patentanmeldung P 42 32 402.5 (& EP-A-0590377) ausgeführt ist, ganz bestimmte Schaltreihenfolgen besitzen. Es ist deshalb vorteilhaft, lediglich ein gemeinsames Betätigungsorgan 25 (siehe Fig. 7) für beide Umschalter S1 und S2 vorzusehen, das vom Benutzer zum Umschalten vom Motor- in den Bremsbetrieb und umgekehrt betätigt wird. Das Betätigungsorgan wirkt dann auf eine Mechanik ein, die die beiden Umschalter S1 und S2 koppelt und deren Schaltkontakte entsprechend der beschriebenen Schaltreihenfolgen bewegt. Die nähere Ausbildung eines derartigen elektrischen Schalters zum Einsatz in einer Bremsschaltung ist auch in der genannten Patentanmeldung beschrieben.

Es ist nun vorteilhaft, den Hilfskontakt 22 mit der Mechanik für die Umschalter S1, S2 derart zu koppeln, daß die Bewegung des Hilfskontakts 22 beim Umschalten vom Brems- in den Motorbetrieb synchronisiert zu der Bewegung der Schaltkontakte der Umschalters S1, S2 ist. Eine derartige Kopplung mit einem gemeinsamen Betätigungsorgan 25 ist in Fig. 7 mit einer Linie zur Wirkverbindung 24 angedeutet.

Beispielsweise kann bei Betätigung des Betätigungsorgans 25 am Elektrohandwerkzeug durch den Benutzer das Umschalten vom Brems- in den Motorbetrieb erfolgen, wobei der Hilfskontakt 22 über die Wirkverbindung 24 gleichzeitig mit dem Öffnen der Schaltkontakte der Umschalter S1, S2 schließt. Alternativ ist es natürlich auch möglich, die Wirkverbindung 24 derart auszugestalten, daß beim Umschalten vom Brems- in den Motorbetrieb durch Betätigung des Betätigungsorgans 25 der Hilfskontakt 22 schaltet und erst danach die Schaltkontakte der Umschalter S1, S2 an den Kontakten b1, b2 des Bremsstromkreises öffnen. Dadurch wird ein Netzkurzschluß wiederum mit Sicherheit verhindert, da der erste Zweig des Bremsstromkreises auf jeden Fall, also auch dann wenn ein Lichtbogen entstehen sollte, gesperrt wird, wodurch dann der Lichtbogen rechtzeitig vor Entstehung eines Netzkurzschlusses zum Verlöschen gebracht wird. In dem Falle, daß kein Lichtbogen entsteht schadet andererseits die Sperrung des ersten Zweiges des Bremsstromkreises für die Funktion des Elektromotors nicht.

Selbstverständlich kann es auch vorteilhaft sein, das erfindungsgemäße Verfahren und die zugehörige Bremsschaltung bei einem Bremsschalter zu verwenden, dessen Schaltkontakte synchron, ohne Zeitversatz der Schaltvorgänge schalten, d.h. bei einem Bremsschalter, der nicht von der Schaltreihenfolge nach der Patentanmeldung P 42 32 402.5 (& EP-A-0590377) Gebrauch macht. Beispielsweise können dann über die in Fig. 7 gezeigte Wirkverbindung 24 die Schaltkontakte an den Umschaltern S1, S2 synchron mittels des Betätigungsorgans 25 bewegt werden und mit derselben Wirkverbindung 24 der Hilfskontakt 22, wie oben näher dargestellt, geschaltet werden.

### Bezugszeichen-Liste:

- 1:: Feldwicklung
- 2, 3:: Anschluß (der Versorgungsspannung)
- 4:: Widerstand
- 5:: Ankerwicklung
- 6:: Kondensator
- 7:: Diode (an Kondensator)
- 8:: Bremselektronik
- 9:: Diode
- 10:: Diode
- 11:: Einrichtung zur Erzeugung eines elektrischen Signals
- 12:: Optokoppler
- 13:: Vorwiderstand (an Optokoppler)
- 14:: Diode (an Optokoppler)
- 15:: Zuleitung (von Optokoppler zur Bremselektronik)
- 16:: Transistor (bei Verstärkerschaltung)
- 17:: Transistor
- 18:: Widerstand
- 19:: Widerstand
- 20:: Diode
- 21:: Zuleitung
- 22:: Hilfskontakt
- 23:: Zuleitung (von Hilfskontakt zu Bremselektronik)
- 24:: Wirkverbindung (zwischen Umschalter und Hilfskontakt)
- 25:: Betätigungsorgan
- 26:: Power-MOSFET (in Bremselektronik)
- 27:: Taktgeber

## Patentansprüche

1. Verfahren für den Betrieb eines elektrisch bremsbaren Elektromotors, insbesondere zum Antrieb von Elektrohandwerkzeugen, wie Bohrmaschinen, Winkelschleifer, Heckenscheren u. dgl., bei dem im Motorbetrieb wenigstens eine Feldwicklung des Elektromotors über zwei Umschalter in Reihe mit der Ankerwicklung an die Versorgungsspannung geschaltet wird, so daß ein Motorkreis gebildet wird, im Bremsbetrieb die Feldwicklung mit der Ankerwicklung über die Umschalter zu einem ersten Zweig eines geschlossenen Bremsstromkreises geschaltet wird und an den Bremsstromkreis gegebenenfalls ein Ohm'scher Bremswiderstand zugeschaltet werden kann, dadurch gekennzeichnet, daß beim Umschalten vom Brems- in den Motorbetrieb der die Ankerwicklung enthaltende erste Zweig des Bremsstromkreises für den Bremsstrom gesperrt wird.

2. Verfahren nach Anspruch 1, dadurch gekennzeichnet, daß das Sperren des ersten Zweiges des Bremsstromkreises für den Bremsstrom lediglich dann erfolgt, wenn das Auftreten eines Lichtbogens an einem Umschalter beim Umschalten vom Brems- in den Motorbetrieb festgestellt wird.

3. Verfahren nach Anspruch 1 oder 2, dadurch gekennzeichnet, daß der Ohm'sche Bremswiderstand in einem zweiten Zweig des Bremsstromkreises unter Überbrückung der Ankerwicklung separat vom ersten Zweig zugeschaltet werden kann, so daß der Bremsstrom bei gesperrtem ersten Zweig im zweiten Zweig des Bremsstromkreises fließt.

4. Verfahren nach Anspruch 1, 2 oder 3, dadurch gekennzeichnet, daß beim Umschalten vom Brems- in den Motorbetrieb die Größe des im Bremsstromkreis fließenden Bremsstromes oder eine dazu in funktionellem Zusammenhang stehende Größe ermittelt wird und in Abhängigkeit von der ermittelten Größe der erste Zweig des Bremsstromkreises gesperrt wird.

5. Verfahren nach einem der Ansprüche 1 bis 4, dadurch gekennzeichnet, daß der erste Zweig des Bremsstromkreises beim Umschalten vom Motor- in den Bremsbetrieb entsperrt wird.

6. Verfahren nach einem der Ansprüche 1 bis 4, dadurch gekennzeichnet, daß der erste Zweig des Bremsstromkreises entsperrt wird, nachdem der Motorbetrieb eingeschaltet ist.

7. Bremsschaltung für einen Elektromotor zur Durchführung des Verfahrens nach einem der Ansprüche 1 bis 6, mit einem aus wenigstens zwei Umschaltern S1, S2 bestehenden Bremsschalter, wobei im Motorbetrieb wenigstens eine Feldwicklung des Elektromotors über die beiden Umschalter S1, S2 in Reihe mit der Ankerwicklung an der Versorgungsspannung liegt, so daß ein Motorkreis gebildet ist, im Bremsbetrieb die Feldwicklung mit der Ankerwicklung über die beiden Umschalter S1, S2 einen ersten Zweig eines geschlossenen Bremsstromkreises bildet, indem ein Umschalter S1 mittels eines Schaltkontakts mit dem netznahen Anschluß der Feldwicklung verbunden ist und zwischen einem an den Netzpol geschalteten Kontakt a1 und einem mit einem ersten Anschluß an den Bremsstromkreis verbundenen Kontakt b1 schaltet sowie der zweite Umschalter S2 mittels eines Schaltkontakts mit dem netzfernen Anschluß der Feldwicklung verbunden ist und zwischen einem mit dem Anschluß zur Ankerwicklung verbundenen Kontakt a2 und einem mit einem zweiten Anschluß an den Bremsstromkreis verbundenen Kontakt b2 schaltet, an den Bremsstromkreis gegebenenfalls ein Ohm'scher Bremswiderstand angeschaltet ist und wobei beim Umschalten vom Motor- in den Bremsbetrieb vorzugsweise ein Zeitversatz der Schaltvorgänge der beiden Umschalter S1, S2 vorliegt, dadurch gekennzeichnet, daß im ersten Zweig des Bremsstromkreises ein elektrisches Steuerbauteil, das mindestens zwei elektrische Zustände besitzt, angeordnet ist, wobei es sich um einen ersten Zustand mit einem hohen Ohm'schen Widerstand, vorzugsweise einem nichtleitenden Zustand und um einen zweiten Zustand mit einem niedrigen Ohm'schen Widerstand für den Bremsstrom handelt, und daß mit einem der beiden Umschalter S1, S2 eine Einrichtung (11) zur Erzeugung eines elektrischen Signals beim Umschalten vom Brems- in den Motorbetrieb in Verbindung steht, wobei dieses Signal das elektrische Steuerbauteil in den ersten hochohmigen Zustand versetzt.

8. Bremsschaltung nach Anspruch 7, dadurch gekennzeichnet, daß das elektrische Steuerbauteil aus einer an sich bekannten Bremselektronik (8) zur Steuerung oder Regelung des Bremsstromes besteht.

9. Bremsschaltung nach Anspruch 7 oder 8, dadurch gekennzeichnet, daß ein als Ohm'scher Bremswiderstand wirkender Widerstand (4) zwischen dem netzfernen Umschalter S2 und der Ankerwicklung (5) geschaltet ist, wobei dieser Widerstand (4) über zwei als Freilaufdioden wirkende Dioden (10,7) in einem die Ankerwicklung (5) und das elektrische Steuerbauteil überbrückenden, zweiten Zweig des Bremsstromkreises angeschaltet ist.

10. Bremsschaltung nach Anspruch 7, 8 oder 9, dadurch gekennzeichnet, daß beim Umschalten vom Brems- in den Motorbetrieb beide Umschalter S1, S2 im wesentlichen synchron öffnen, indem die Schaltkontakte sich im wesentlichen gleichzeitig von den Kontakten b1, b2 wegbewegen.

11. Bremsschaltung nach Anspruch 10, dadurch gekennzeichnet, daß ein gemeinsames Betätigungsorgan (25) für die beiden Umschalter S1 und S2 auf eine Mechanik einwirkt, die die beiden Umschalter S1, S2 miteinander koppelt und die Bewegung der Schaltkontakte auslöst.

12. Bremsschaltung nach einem der Ansprüche 7 bis 11, dadurch gekennzeichnet, daß die Einrichtung (11) zur Erzeugung eines elektrischen Signals mit elektrischem Kontakt zu dem Schaltkontakt des Umschalters S1 bzw. S2 und dem zugehörigen Anschluß b1 bzw. b2 des Bremsstromkreises angeordnet ist.

13. Bremsschaltung nach Anspruch 12, dadurch gekennzeichnet, daß die Einrichtung (11) zur Erzeugung eines elektrischen Signals dann das Signal erzeugt, wenn zwischen dem Schaltkontakt des Umschalters S1 bzw. S2 und dem zugehörigen Anschluß b1 bzw. b2 des Bremsstromkreises ein Lichtbogen auftritt.

14. Bremsschaltung nach Anspruch 13, dadurch gekennzeichnet, daß die Einrichtung (11) zur Erzeugung eines elektrischen Signals das Signal in Abhängigkeit vom Spannungsabfall zwischen dem Schaltkontakt des Umschalters S1 bzw. S2 und dem zugehörigen Anschluß b1 bzw. b2 des Bremsstromkreises erzeugt.

15. Bremsschaltung nach Anspruch 14, dadurch gekennzeichnet, daß die Einrichtung (11) zur Erzeugung eines elektrischen Signals aus einem Optokoppler (12) besteht, dessen Eingänge zwischen dem Schaltkontakt des Umschalters S1 bzw. S2 und dem zugehörigen Anschluß bl bzw. b2 des Bremsstromkreises liegen und dessen Ausgänge über Zuleitungen (15) mit der Bremselektronik (8) verbunden sind.

16. Bremsschaltung nach Anspruch 15, dadurch gekennzeichnet, daß an den Eingängen des Optokopplers (12) ein Vorwiderstand (13) angeschaltet ist.

17. Bremsschaltung nach Anspruch 15 oder 16, dadurch gekennzeichnet, daß am Eingang des Optokopplers (12) eine Diode (14) angeschaltet ist, wobei die Anode der Diode (14) dem Kontakt b1 zugewandt ist.

18. Bremsschaltung nach Anspruch 14, dadurch gekennzeichnet, daß die Einrichtung (11) zur Erzeugung eines elektrischen Signals aus einer Schaltung zur Potentialanpassung besteht, deren Eingänge zwischen dem Schaltkontakt des Umschalters S1 bzw. S2 und dem zugehörigen Anschluß b1 bzw. b2 des Bremsstromkreises liegen und deren Ausgänge über Zuleitungen (21) mit der Bremselektronik (8) verbunden sind.

19. Bremsschaltung nach Anspruch 18, dadurch gekennzeichnet, daß die Schaltung zur Potentialanpassung wenigstens einen, vorzugsweise zwei Transistoren (16, 17) besitzt.

20. Bremsschaltung nach Anspruch 11, dadurch gekennzeichnet, daß die Einrichtung (11) zur Erzeugung eines elektrischen Signals aus einem Hilfskontakt (22) besteht, der mit der Mechanik für die Umschalter S1, S2 derart gekoppelt ist, daß die Bewegung des Hilfskontakts (22) beim Umschalten vom Brems- in den Motorbetrieb synchronisiert zu der Bewegung der Schaltkontakte der Umschalters S1, S2 ist.

21. Bremsschaltung nach Anspruch 20, dadurch gekennzeichnet, daß bei Betätigung des Betätigungsorgans (25) für die Umschalter S1, S2 der Hilfskontakt (22) gleichzeitig mit Öffnung der Schaltkontakte der Umschalter S1, S2 an den Kontakten b1, b2 des Bremsstromkreises schaltet.

22. Bremsschaltung nach Anspruch 20, dadurch gekennzeichnet, daß bei Betätigung des Betätigungsorgans (25) für die Umschalter S1, S2 der Hilfskontakt (22) schaltet und erst danach die Schaltkontakte der Umschalter S1, S2 an den Kontakten b1, b2 des Bremsstromkreises öffnen.

23. Bremsschaltung nach Anspruch 20, 21 oder 22, dadurch gekennzeichnet, daß der Hilfskontakt (22) aus einem Schließer besteht, dessen Kontakt beim Umschalten vom Brems- in den Motorbetrieb schließt.

## Claims

1. Method for operating an electrically brakable electric motor, in particular for driving electrical hand-tools, such as drills, right angle grinders, hedge clippers and the like, in which in drive mode at least one field winding of the electric motor is connected to the supply voltage via two change-over switches in series with the armature winding, so that a motor circuit is formed, in braking mode the field winding with the armature winding is connected via the change-over switches to a first branch of a closed braking circuit and if necessary a braking resistor can be connected to the braking circuit, characterised in that on switching over from braking into drive mode the first branch of the braking circuit for the braking current comprising the armature winding is blocked.

2. Method according to claim 1, characterised in that the first branch of the braking circuit for the braking current is only blocked when the appearance of an arc is detected at a change-over switch on switching over from braking into drive mode.

3. Method according to claim 1 or 2, characterised in that the braking resistor can be connected separately from the first branch in a second branch of the braking circuit by bridging the armature winding, so that if the first branch is blocked the braking current flows in the second branch of the braking circuit.

4. Method according to claim 1, 2 or 3, characterised in that on switching over from braking into drive mode the quantity of braking current flowing in the braking circuit or a quantity in functional relation thereto is detected and depending on the detected quantity the first branch of the braking circuit is blocked.

5. Method according to one of claims 1 to 4, characterised in that the first branch of the braking circuit is unblocked on switching over from drive into braking mode.

6. Method according to one of claims 1 to 4, characterised in that the first branch of the braking circuit is unblocked once the drive mode is activated.

7. Braking circuit for an electric motor for performing the method according to one of claims 1 to 6, with a braking controller comprising at least two change-over switches S1, S2, whereby in drive mode at least one field winding of the electric motor is positioned via the two change-over switches S1, S2 in series with the armature winding at the supply voltage, so that a motor circuit is formed, in braking mode the field winding with the armature winding forms a first branch of a closed braking circuit via the two change-over switches S1, S2, in that a change-over switch S1 is connected by means of a circuit contact to the network-close connection of the field winding, and switches between contact a1 connected to the network pole and contact b1 connected to a first connection on the braking circuit and the second change-over switch S2 is connected by means of a switching contact to the network-remote connection of the field winding and switches between contact a2 connected to the connection to the armature winding and contact b2 connected to a second connection to the braking circuit, if necessary a braking resistor is connected to the braking current, and whereby on switching over from drive into braking mode there is preferably a time-shift of the switching processes of the two change-over switches S1, S2, characterised in that in the first branch of the braking circuit an electrical control component is arranged which has at least two electrical states, whereby the first state is a high resistance state, preferably a non-conducting state and the second state is a low resistance state for the braking current, and in that a device (11) ) for generating an electrical signal on switching over from braking into drive mode is connected to one of the two change-over switches S1, S2, whereby said signal shifts the electric control component into the first high voltage state.

8. Braking circuit according to claim 7, characterised in that the electric control component comprises known braking electronics (8) to control or regulate the braking current.

9. Braking circuit according to claim 7 or 8, characterised in that a resistor (4) acting as a braking resistor (4) is connected between the network-remote change-over switch S2 and the armature winding (5), whereby the said resistor (4) is connected via two diodes (10, 7) acting as recovery diodes in a second branch of the braking circuit bridging the armature winding (5) and the electrical control component.

10. Braking circuit according to claim 7, 8 or 9, characterised in that on switching over from braking into drive mode the two change-over switches S1, S2 open synchronously, in that the switching contacts move away from contacts b1, b2 simultaneously.

11. Braking circuit according to claim 10, characterised in that a common activating element (25) for the two change-over switches S1 and S2 acts on a mechanism which couples the two change-over switches S1, S2 and triggers the movement of the switching contacts.

12. Braking circuit according to one of claims 7 to 11, characterised in that the device (11) for generating an electrical signal is arranged in electrical contact with the circuit contact of the change-over switch S1 or S2 and the associated connection b1 or b2 of the braking circuit.

13. Braking circuit according to claim 12, characterised in that the device (11) for generating an electrical signal produces the signal when an arc appears between the switching contact of the change-over switch S1 or S2 and the associated connection b1 or b2 of the braking circuit.

14. Braking circuit according to claim 13, characterised in that the device (11) for generating an electrical signal produces the signal depending on the voltage drop between the switching contact of the change-over switch S1 or S2 and the associated connection b1 or b2 of the braking circuit.

15. Braking circuit according to claim 14, characterised in that the device (11) for generating an electrical signal comprises an optical coupler (12), the inputs of which are positioned between the switching contact of the change-over switch S1 or S2 and the associated connection b1 or b2 of the braking circuit and the outputs of which are connected by lines (15) to the braking electronics (8).

16. Braking circuit according to claim 15, characterised in that a series resistor (13) is connected to the inputs of the optical coupler (12).

17. Braking circuit according to claim 15 or 16, characterised in that a diode (14) is connected to the input of the optical coupler (12) whereby the anode of the diode (14) faces contact b1.

18. Braking circuit according to claim 14, characterised in that the device (11) for generating an electrical signal comprises a circuit for adjusting potential, the inputs of which are positioned between the switching contact of the change-over switch S1 or S2 and the associated connection b1 or b2 of the braking circuit and the outputs of which are connected by lines (21) to the braking electronics (8).

19. Braking circuit according to claim 18, characterised in that the circuit for adjusting potential has at least one, preferably two transistors (16, 17).

20. Braking circuit according to claim 11, characterised in that the device (11) for generating an electrical signal comprises an auxiliary contact (22) which is coupled with the mechanism for the change-over switches S1, S2 so that the movement of the auxiliary contact (22) on switching over from braking into drive mode is synchronised to the movement of the switching contacts of the change-over switches S1, S2.

21. Braking circuit according to claim 20, characterised in that on activating the activating element (25) for the change-over switches S1, S2 the auxiliary contact (22) switches simultaneously with the opening of the switching contacts of the change-over switches S1, S2 at the contacts b1, b2 of the braking circuit.

22. Braking circuit according to claim 20, characterised in that the auxiliary contact (22) switches on activating the activating element (25) for the change-over switches S1, S2 and only afterwards do the switching contacts of the changeover switches S1, S2 at the contacts b1, b2 of the braking circuit open.

23. Braking circuit according to claim 20, 21 or 22, characterised in that the auxiliary contact (22) comprises a normally open contact, the contact of which closes on switching over from braking into drive mode.

## Revendications

1. Procédé pour le fonctionnement d'un moteur électrique freinable, en particulier pour l'entraînement d'outils manuels électriques, comme des perceuses, des meuleuses d'angle, des taille-haies et analogues, pour lequel dans le fonctionnement à moteur, au moins un enroulement de champ du moteur électrique est raccordé, par l'intermédiaire de deux commutateurs en série avec l'enroulement d'induit, à la tension d'alimentation, de sorte qu'un circuit moteur est formé, dans le fonctionnement de freinage l'enroulement de champ est raccordé avec l'enroulement d'induit, par l'intermédiaire des commutateurs, à une seconde branche d'un circuit de courant de freinage fermé, et au circuit de courant de freinage peut également être raccordée, le cas échéant, une résistance de freinage ohmique,
caractérisé en ce que, lors de la commutation du fonctionnement de freinage vers le fonctionnement à moteur, la première branche du circuit de courant de freinage, comportant l'enroulement d'induit, est fermée pour le courant de freinage.

2. Procédé selon la revendication 1,
caractérisé en ce que la fermeture de la première branche du circuit de courant de freinage est réalisée pour le courant de freinage, uniquement lorsque l'apparition d'un arc électrique sur un commutateur est détectée, lors de la commutation du fonctionnement de freinage vers le fonctionnement à moteur.

3. Procédé selon l'une des revendications 1 ou 2,
caractérisé en ce que la résistance de freinage ohmique est raccordée à une seconde branche du circuit de courant de freinage, par le pontage de l'enroulement d'induit de façon séparée de la première branche de sorte que le courant de freinage s'écoule dans la seconde branche du circuit de courant de freinage, lorsque la première branche est fermée.

4. Procédé selon l'une des revendications 1, 2 ou 3,
caractérisé en ce que, lors de la commutation du fonctionnement de freinage vers le fonctionnement à moteur, la valeur du courant de freinage s'écoulant dans le circuit de courant de freinage ou une valeur reliée à celui-ci de façon fonctionnelle est détectée, et en fonction de la valeur détectée, la première branche du circuit de courant de freinage est fermée.

5. Procédé selon l'une des revendications 1 à 4,
caractérisé en ce que la première branche du circuit de courant de freinage est déverrouillée, lors de la commutation du fonctionnement à moteur vers le fonctionnement de freinage.

6. Procédé selon l'une des revendications 1 à 4,
caractérisé en ce que la première branche du circuit de courant de freinage est déverrouillée, après que le fonctionnement à moteur ait été mis en service.

7. Circuit de freinage pour un moteur électrique, pour la mise en oeuvre du procédé selon l'une des revendications 1 à 6, comportant un commutateur de freinage constitué d'au moins deux commutateurs S1, S2, dans lequel au moins un enroulement de champ du moteur électrique est relié, dans le fonctionnement à moteur, par l'intermédiaire des deux commutateurs S1, S2, en série avec l'enroulement d'induit, à la tension d'alimentation, de sorte qu'un circuit moteur est formé, en fonctionnement de freinage l'enroulement de champ forme avec l'enroulement d'induit, par l'intermédiaire des deux commentateurs S1, S2, une première branche d'un circuit de courant de freinage fermé, dans lequel un commutateur S1 est relié au moyen d'un contact de commutation au raccordement proche du réseau de l'enroulement de champ, et commute entre un contact al monté sur le pâle de réseau et un contact bl relié par un premier raccordement au circuit de courant de freinage, et le second commutateur S2 est relié au moyen d'un contact de commutation au raccordement éloigné du réseau de l'enroulement de champ, et commute entre un contact a2 relié au raccordement vers l'enroulement d'induit et un contact b2 relié à un second raccordement sur le circuit de courant de freinage, une résistance de freinage ohmique est montée le cas échéant sur le circuit de courant de freinage, et lors de la commutation du fonctionnement à moteur vers le fonctionnement de freinage un décalage temporel est prévu avant le processus de commutation des deux commutateurs S1, S2,
caractérisé en ce que dans la première branche du circuit de courant de freinage est agencé un élément de commande électrique qui présente au moins deux états électriques, à savoir un premier état présentant une résistance ohmique élevée, de préférence un état non conducteur, et un second état présentant une résistance ohmique réduite pour le courant de freinage, et en ce qu'à l'un des deux commutateurs S1, S2 est relié un dispositif (11) pour engendrer un signal électrique, lors de la commutation du fonctionnement de freinage vers le fonctionnement à moteur, ce signal décalant l'élément de commande électrique dans le premier état à résistance élevée.

8. Circuit de freinage selon la revendication 7,
caractérisé en ce que l'élément de commande électrique est constitué d'une électronique de freinage (8) connue, pour la commande ou le réglage du courant de freinage.

9. Circuit de freinage selon l'une des revendications 7 ou 8,
caractérisé en ce qu'une résistance (4) agissant comme résistance de freinage ohmique est montée entre le commutateur S2 éloigné du réseau et l'enroulement d'induit (5), cette résistance (4) étant raccordée, par l'intermédiaire de deux diodes (10,7) agissant comme diodes de roue libre, à une seconde branche du circuit de courant de freinage, réalisant le pontage de l'enroulement d'induit (5) et de l'élément de commande électrique.

10. Circuit de freinage selon l'une des revendications 7, 8 ou 9,
caractérisé en ce que, lors de la commutation du fonctionnement de freinage vers le fonctionnement à moteur, les deux commutateurs S1, S2 s'ouvrent essentiellement de façon synchrone, par le fait que les contacts de commutation s'écartent essentiellement de façon simultanée des contacts b1, b2.

11. Circuit de freinage selon la revendication 10,
caractérisé en ce qu'un organe d'actionnement commun (25) pour les deux commutateurs S1 et S2 agit sur une mécanique qui couple ensemble les deux commutateurs S1, S2 et déclenche le mouvement des contacts de commutation.

12. Circuit de freinage selon l'une des revendications 7 à 11,
caractérisé en ce que le dispositif (11) pour engendrer un signal électrique, est agencé avec un contact électrique vers le contact de commutation du commutateur S1 ou S2 et le raccordement associé b1 ou b2 du circuit de courant de freinage.

13. Circuit de freinage selon la revendication 12,
caractérisé en ce que le dispositif (11) pour engendrer un signal électrique, engendre le signal, lorsqu'un arc électrique apparaît entre le contact de commutation du commutateur S1 ou S2 et le raccordement associé b1 ou b2 du circuit de courant de freinage.

14. Circuit de freinage selon la revendication 13,
caractérisé en ce que le dispositif (11) pour engendrer un signal électrique, engendre le signal en fonction de la baisse de tension entre le contact de commutation du commutateur S1 ou S2 et le raccordement associé b1 ou b2 du circuit de courant de freinage.

15. Circuit de freinage selon la revendication 14,
caractérisé en ce que le dispositif (11) pour engendrer un signal électrique est constitué d'un coupleur optique (12), dont les entrées sont situées entre le contact de commutation du commutateur S1 ou S2 et le raccordement associé b1 ou b2 du circuit de courant de freinage, et dont les sorties sont reliées, par l'intermédiaire de liaisons (15), à l'électronique de freinage (8).

16. Circuit de freinage selon la revendication 15,
caractérisé en ce qu'une résistance série (13) est montée aux entrées du coupleur optique (12).

17. Circuit de freinage selon l'une des revendications 15 ou 16,
caractérisé en ce qu'une diode (14) est montée à l'entrée du coupleur optique (12), l'anode de la diode (14) étant en regard du contact b1.

18. Circuit de freinage selon la revendication 14,
caractérisé en ce que le dispositif (11) pour engendrer un signal électrique est constitué d'un circuit pour l'adaptation de potentiel, dont les entrées sont situées entre le contact de commutation du commutateur S1 ou S2 et le raccordement associé b1 ou b2 du circuit de courant de freinage, et dont les sorties sont reliées, par l'intermédiaire de liaisons (21), à l'électronique de freinage (8).

19. Circuit de freinage selon la revendication 18,
caractérisé en ce que le circuit pour l'adaptation de potentiel comporte au moins un, de préférence deux transistors (16,17).

20. Circuit de freinage selon la revendication 11,
caractérisé en ce que le dispositif (11) pour engendrer un signal électrique est constitué d'un contact auxiliaire (22) qui est couplé à la mécanique pour les commutateurs S1, S2 de sorte que le mouvement du contact auxiliaire (22), lors de la commutation du fonctionnement de freinage vers le fonctionnement à moteur, est synchronisé avec le mouvement des contacts de commutation des commutateurs S1, S2.

21. Circuit de freinage selon la revendication 20,
caractérisé en ce que, lors de l'actionnement de l'organe d'actionnement (25) pour les commutateurs S1, S2, le contact auxiliaire (22) commute simultanément, avec l'ouverture des contacts de commutation, le commutateur S1, S2 aux contacts b1, b2 du circuit de courant de freinage.

22. Circuit de freinage selon la revendication 20,
caractérisé en ce que, lors de l'actionnement de l'organe d'actionnement (25) pour les commutateurs S1, S2, le contact auxiliaire (22) commute et ce n'est qu'après que les contacts de commutation ouvrent le commutateur S1, S2 aux contacts bl, b2 du circuit de courant de freinage.

23. Circuit de freinage selon l'une des revendications 20, 21 ou 22,
caractérisé en ce que le contact auxiliaire (22) est constitué d'un contacteur, dont le contact ferme lors de la commutation du fonctionnement de freinage vers le foncionnement à moteur.
